# EUROPÄISCHE PATENTSCHRIFT

(11) **EP 2 419 364 B1**
(45) Veröffentlichungstag und Bekanntmachung des Hinweises auf die Patenterteilung: **12.06.2013**
(21) Anmeldenummer: 10721641.8
(22) Anmeldetag: 16.04.2010
(51) Int. Cl.: B66F 9/06, B60L 11/18, B60L 15/38, B60L 11/00

(54) **VERFAHREN ZUM BETREIBEN EINER FAHRERLOSEN, MOBILEN MONTAGE- UND/ODER MATERIALTRANSPORTEINHEIT UND FAHRERLOSE, MOBILE MONTAGE- UND /ODER MATERIALTRANSPORTEINHEIT HIERFÜR**
METHOD FOR OPERATING AN AUTOMATED GUIDED, MOBILE ASSEMBLY AND/OR MATERIAL TRANSPORT UNIT AND AUTOMATED GUIDED, MOBILE ASSEMBLY AND/OR MATERIAL TRANSPORT UNIT THEREFOR
PROCÉDÉ POUR EXPLOITER UNE UNITÉ DE MONTAGE ET/OU UNITÉ DE TRANSPORT DE MATÉRIAU SANS CHAUFFEUR ET MOBILE ET UNITÉ DE MONTAGE ET/OU DE TRANSPORT DE MATÉRIAU SANS CHAUFFEUR ET MOBILE PRÉVUE À CET EFFET

(30) Priorität: 17.04.2009 DE 102009017556
(43) Veröffentlichungstag der Anmeldung: 22.02.2012
(73) Patentinhaber: Bär, Ralf, 75050 Gemmingen (DE)
(72) Erfinder: Bär, Ralf, 75050 Gemmingen (DE)
(74) Vertreter: Clemens, Gerhard
(86) Internationale Anmeldenummer: PCT/DE2010/000430
(87) Internationale Veröffentlichungsnummer: WO 2010/118737

(56) Entgegenhaltungen:
- EP-A1- 0 475 106
- EP-A1- 1 864 849
- JP-A- 2006 232 102
- US-A1- 2008 277 173

## Beschreibung

### TECHNISCHES GEBIET

Die vorliegende Erfindung betrifft ein Verfahren zum Betreiben einer fahrerlosen, mobilen Montage- und/oder Materialtransporteinheiten als fahrerloses Transportsystem (FTS) mit stationären Montage- und/oder Lagerstationen, wobei eine Systemsteuereinrichtung für den gesamten Montageablauf eingesetzt wird und die fahrerlosen, mobilen Montage- und/oder Materialtransporteinheiten eine Fahreinrichtung für die Fahrbewegung der Einheit, eine Antriebseinrichtung für die Fahreinrichtung, eine Energiespeichereinrichtung für die Bereitstellung der Energie für die Antriebseinrichtung und eine Steuereinrichtung zur Steuerung der Fahrbewegung in Abstimmung mit der Systemsteuereinrichtung aufweisen.

Weiterhin betrifft die Erfindung eine fahrerlose, mobile Montage- und/oder Materialtransporteinheit für eine Montageanlage, insbesondere zum Einsatz in einem Verfahren zum Betreiben einer derartigen Einheit, mit einer Fahreinrichtung für die Fahrbewegung, einer Antriebseinrichtung für die Fahreinrichtung, einer ersten Energiespeichereinrichtung, die als Batterieeinrichtung ausgebildet ist, und einer Steuereinrichtung zur Steuerung der Fahrbewegung in Abstimmung mit einer Systemsteuereinrichtung.

### STAND DER TECHNIK

In der Industrie werden für fahrerlose, mobile Montage- und/oder Materialtransporteinheiten Systeme gefordert, die ohne Netzanbindung 24 Stunden pro Tag und 7 Tage die Woche durcharbeiten können. Normalerweise werden Batterien als Stromversorger eingesetzt. Diese müssen aber in entsprechenden Intervallen immer wieder aufgeladen oder ausgetauscht werden. In dieser Zeit können die Flurfahrzeuge nicht benutzt werden.

Es ist bekannt, ein Verfahren zum Betreiben einer Montageanlage mit FTS der eingangs genannten Art anzuwenden, bei dem die fahrerlosen, mobilen Montage- und/oder Materialtransporteinheiten eine Energiespeichereinrichtung für die Bereitstellung der Energie für die Antriebseinrichtung aufweisen, die als Batterie ausgebildet ist. Um die Einsatzfähigkeit über einen längeren Zeitraum aufrechtzuerhalten, müssen die Batterien eine hohe Kapazität aufweisen, wodurch ein Einsatz von großvolumigen und schweren Batterien erforderlich ist. Sobald der Ladezustand der Batterien kritisch wird, muss die Montage- und/oder Materialtransporteinheit an einer separaten Ladestation aufgeladen werden und steht für einen längeren Zeitraum nicht mehr für Einsatzzwecke zur Verfügung.

So werden die Ansprüche der FTS-Anwender immer höher. Ein FTS soll 7 Tage in der Woche und 24 Stunden pro Tag fahren. Die Ladezeiten von 5 bis 6 Stunden für bisherige batteriebetriebene FTS können dabei nicht mehr eingehalten werden.

Darüber hinaus haben induktionsgeführte Energiesysteme den Nachteil, dass der Boden aufgerissen werden muss, ein schlechter Energie-Wirkungsgrad vorliegt und die ganze Anwendung sehr teuer und unflexibel ist.

Es sind Elektrofahrzeuge bekannt, bei denen neben einer Batterie eine Doppelschichtkondensatoreinrichtung, die auch Supercap oder Boostcap genannt wird, vorhanden ist. Das Energiemanagement ist dabei so gestaltet, dass die Batterie den Motor versorgt. Der Supercap wird eingesetzt, um die Batterie zu entlasten zum Beispiel bei Bergfahrten damit ein nicht zu hoher Strom fließt und die Batterie nicht vorzeitig verschleißt. Im generatorischen Betrieb - zum Beispiel bei Talfahrten - wird der Supercap aufgeladen.

In der EP 0 475 106 A1 ist ein fahrerloses Transportsystem mit einer fahrerlosen Fahreinheit beschrieben, wobei die Fahreinheit entlang einer klar definierten Fahrstrecke geführt ist. An bestimmten Bereichen der Fahrstrecke sind Ladeelektroden vorhanden, die greifbar mit an dem Fahrzeug vorhandenen Elektroden in Kontakt bringbar sind, so dass das Fahrzeug angetrieben werden kann und gegebenenfalls die am Fahrzeug vorhandene Batterie aufgeladen werden kann.

Die US 2008/0277173 A1 offenbart ein Aufladesystem für Fahrzeuge, wie beispielsweise Busse, bei denen die Fahrzeuge ein Energiespeichersystem aufweisen, dass zwei Komponenten, nämlich eine Doppelschichtkondensatoreinrichtung und eine Batterie aufweisen. Die Energie für Antriebseinrichtung des Fahrzeugs wird durch die Doppelschichtkondensatoren zur Verfügung gestellt. Diese Doppelschichtkondensatoren werden an bestimmten Ladestationen automatisch aufgeladen. Bei einer Talfahrt oder Bremsung wird die dadurch freiwerdende Energie (der Motor arbeitet dann als Generator) zur Aufladung der Doppelschichtkondensatoren verwendet, wobei diese Energie, sobald die Doppelschichtkondensatoreneinrichtungen vollgeladen ist, über diesselbe an die Batterie zu deren Aufladung weitergegeben wird.

### DARSTELLUNG DER ERFINDUNG

Ausgehend von dem genannten Stand der Technik liegt der vorliegenden Erfindung die Aufgabe beziehungsweise das technische Problem zugrunde, ein Verfahren zum Betreiben einer Montageanlage der eingangs genannten Art anzugeben, das eine lange Einsatzdauer der Montage- und/oder Materialtransporteinheiten ermöglicht und das eine Volumen- und Gewichtsreduzierung der Montage- und/oder Materialtransporteinheiten mit sich bringt und problemlos einen Dauerbetrieb ermöglicht.

Der vorliegenden Erfindung liegt weiterhin die Aufgabe beziehungsweise das technische Problem zugrunde, eine fahrerlose, mobile Montage- und/oder Materialtransporteinheit zum Einsatz in den oben genannten Verfahren anzugeben, das eine lange Einsatzzeit ermöglicht, wobei eine kompakte und leichte Konstruktion ermöglicht werden soll und die ein efffektives Energiemanagement umgesetzt werden kann.

Das erfindungsgemäße Verfahren zum betreiben der Montageanlage ist durch die Merkmale des unabhängigen Anspruchs 1 gegeben. Vorteilhafte Ausgestaltungen und Weiterbildungen des erfindungsgemäßen Verfahrens sind Gegenstand der von dem unabhängigen Anspruch 1 direkt oder indirekt abhängigen Ansprüche.

Das erfindungsgemäße Verfahren zeichnet sich demgemäß dadurch aus, dass zusätzlich eine zweite Energiespeichereinrichtung eingesetzt wird, die als schnellaufladbare Einrichtung, insbesondere Doppelschichtkondensatoreinrichtung, ausgebildet ist, die zweite Energiespeichereinrichtung bei Stillstand der Einheit an einer Ladestation aufgeladen wird, die zweite Energiespeichereinrichtung die Antriebsenergie für die Antriebseinrichtung zur Verfügung stellt, die zweite Energiespeichereinrichtung gleichzeitig die erste Energiespeichereinrichtung aufgeladen hält oder neu auflädt, bei Entleerung der zweiten Energiespeichereinrichtung oder bei Unterschreitung eines vorgegebenen Spannungswertes die erste Energiespeichereinrichtung die Antriebsenergie für die Antriebseinrichtung zur Verfügung stellt bis die zweite Energiespeichereinrichtung an einer Montage- oder Ladestation wieder aufgeladen wird und die erste Energiespeichereinrichtung die Energie zum Betreiben einer Steuereinrichtung und/oder einer Sicherungseinrichtung mit Scanner, Sensoren oder dergleichen zur Verfügung stellt.

Das fahrerloses Transportfahrzeug fährt innerhalb seiner Fahrstrecke an einen Haltepunkt. Es verweilt eine kurze Zeit zum Be- und Entladen. Während dieser Zeit kontaktiert es über Ladekontakte ein externes Ladegerät, das beispielsweise an der Arbeitsstation vorhanden ist. Die Doppelschichtkondensatoreinrichtungen werden in dieser Zeit mit einem hohen Strom aufgeladen. Mit dieser Energie kann das Transportfahrzeug eine gewisse Zeit weiterfahren bis es zu einer neuen Ladestation kommt. Durch den Einsatz von Doppelschichtkondensatoreinrichtungen ist eine neue Energietechnologie für fahrzeuglose Transportsysteme (FTS) oder allgemein für batteriebetriebene Fahrzeuge möglich.

Durch den Einsatz einer Doppelschichtkondensatoreinrichtung als Energiespeicher für die Antriebseinrichtung der Montage- und/oder Materialtransporteinheit ist es möglich, diese während der Verweildauer an einer Montagestation zu laden, so dass sehr hohe Einsatzzeiten möglich sind.

Eine besonders bevorzugte Ausgestaltung des erfindungsgemäßen Verfahrens zeichnet sich dadurch aus, dass eine zusätzliche Energiespeichereinrichtung mit hoher Energiedichte, insbesondere Batterie, eingesetzt wird, was insbesondere zur Sicherung der Einsatzfähigkeit der fahrerlosen, mobilen Montage- und/oder Materialtransporteinheit bei längeren Stillstandzeiten dient. Das Volumen und das Gewicht dieser Batterie kann jedoch gegenüber den im Stand der Technik verwendeten Batterien deutlich reduziert werden, da die Energie für die normale Einsatzfähigkeit durch die Doppelschichtkondensatoreinrichtung zur Verfügung gestellt wird.

Eine besonders bevorzugte Weiterbildung des erfindungsgemäßen Verfahrens zeichnet sich dadurch aus, dass der Ladekontakt zur Aufladung der Energiespeichereinrichtung bei Erreichen der jeweiligen Position an der Montagestation automatisch hergestellt wird.

Bei dem beschriebenen Verfahren beruht die Idee darauf, eine Doppelschichtkondensatoreinrichtung mit einer Batterieeinrichtung zu kombinieren, das heißt eine Doppelschichtkondensatoreinrichtung zum schnellen Aufladen an einer Ladestation zu benutzen, um das Fahrzeug bei einem kurzen Stillstand (beim Parken, im Montageprozess, etc.) mit maximaler Energie aufzuladen. Die dabei in der Doppelschichtkondensatoreinrichtung gespeicherte Energie reicht aus, um die Antriebseinrichtung des Fahrzeuges von einer Montage- oder Ladestation bis zur nächsten mit Energie zu versorgen und gleichzeitig aber auch die Batterieeinrichtung immer aufgeladen zu halten beziehungsweise aufzuladen. Abhängig von der Kapazität der Doppelschichtkondensatoreinrichtungen und der gewünschten Reichweite der Montage- und/oder Materialtransporteinheit sind nur wenige Ladestationen notwendig.

Falls eine Unterbrechung im laufenden Betrieb eintritt (zum Beispiel Werksferien, Stau, etc.) und sich die Doppelschichtkondensatoreinrichtung entleert, wird auf Batteriebetrieb umgeschaltet und die mobile, fahrerlose Montage- und/oder Materialtransporteinheit ist nun in der Lage ohne Doppelschichtkondensatoreinrichtung bis zur nächsten Ladestation zu fahren, wo die Doppelschichtkondensatoreinrichtung von neuem aufgeladen werden kann.

Doppelschichtkondensatoreinrichtungen haben die Eigenschaft, dass sie ca. 1 Million Ladezyklen aushalten, bis ihre Kapazität um ca. 20 % geringer wird. Allerdings haben sie den Nachteil gegenüber einer Batterieeinrichtung, dass sie die Spannung nicht konstant halten, sondern einer Entladekurve folgen.

Dieser Nachteil kann umgangen werden, in dem man unabhängig von der Spannung einen definierten Strom entnimmt, der innerhalb einer bestimmten Spannungdifferenz erreichbar ist. Oder man speist aus der Doppelschichtkondensatoreinrichtung über einen breitbandigen DC/DC-Wandler eine Batterie und entnimmt aus dieser die notwendige Energie für den Antrieb der Montage- und/oder Materialtransporteinheit. Diese Vorgehensweise wird bei dem erfindungsgemäßen Verfahren umgesetzt.

Eine für den praktischen Betrieb besonders vorteilhafte Ausgestaltung zeichnet sich dadurch aus, dass die erste Energiespeichereinrichtung (Batterieeinrichtung) mit 27 V (Volt) und die zweite Energiespeichereinrichtung (Doppelschichtkondensatoreinrichtung) mit 32 V oder 48 V (Volt) betrieben wird.

Um einen dauerhaft zuverlässigen Betrieb zu gewährleisten, zeichnet sich eine besonders vorteilhafte Weiterbildung des erfindungsgemäßen Verfahrens dadurch aus, dass die Umschaltung auf Batteriebetrieb erfolgt, sobald die Doppelschichtkondensatoreinrichtung einen Spannungswert von 20 V (Volt) unterschreitet.

Die erfindungsgemäße fahrerlose, mobile Montage- und/oder Materialtransporteinheit ist durch die Merkmale des unabhängigen Anspruchs 7 gegeben.

Die erfindungsgemäße fahrerlose, mobile Montage- und/oder Materialtransporteinheit als fahrerloses Transportsystem (FTS) für eine Montageanlage, insbesondere zum Einsatz in einem der oben beschriebenen Verfahren mit einer Fahreinrichtung für die Fahrbewegung, einer Antriebseinrichtung für die Fahreinrichtung, einer ersten Energiespeichereinrichtung für die Bereitstellung der Energie für die Antriebseinrichtung, die als Batterieeinrichtung ausgebildet ist und einer Steuereinrichtung zur Steuerung der Fahrbewegung in Abstimmung mit einer Systemsteuereinrichtung, zeichnet sich dadurch aus, dass eine zweite Energiespeichereinrichtung vorhanden ist, die als schnellaufladbare Einrichtung, insbesondere Doppelschichtkondensatoreinrichtung, ausgebildet ist, dass eine Steuereinrichtung vorhanden ist, die bei geladener zweiter Energiespeichereinrichtung die zur Verfügungsstellung der Antriebsenergie für die Antriebseinrichtung steuert und gleichzeitig die erste Energiespeichereinrichtung im geladenen Zustand hält oder neu auflädt und bei Entleerung der zweiten Energiespeichereinrichtung oder bei Unterschreitung eines vorgegebenen Spannungswertes der zweiten Energiespeichereinrichtung die erste Energiespeichereinrichtung aktiviert zur Energieversorgung der Antriebseinheit bis die zweite Energiespeichereinrichtung wieder aufgeladen ist, wobei die erste Energiespeichereinrichtung die Energie zum Betreiben einer Steuereinrichtung und/oder einer Sicherungseinrichtung mit Scanner, Sensoren oder dergleichen zur Verfügung stellt.

Da während der Einsatzzeit die Energie zum Betreiben der fahrerlosen, mobilen Montage- und/oder Materialtransporteinheit durch die Doppelschichtkondensatoreinrichtung zur Verfügung gestellt wird, die an der jeweiligen Montagestation aufgeladen wird, kann die Batterieeinrichtung als kompakte und relativ leichte Batterieeinrichtung ausgebildet sein, wodurch eine kompakte und leichte Konstruktion der fahrerlosen, mobilen Montage- und/oder Materialtransporteinheit möglich wird.

Kern der vorliegenden Erfindung ist ein Energiemanagement unter Einsatz von Doppelschichtkondensatoren (Boostcap), die die Antriebseinrichtung direkt mit Energie versorgen. Bisher wurden Boostcaps eingesetzt, um rückgewonnene Bremsenergie bei Elektrofahrzeugen zu speichern und zur Entlastung einer Batterie große Ströme beim Anfahren eines Fahrzeuges zu liefern.

Der große Vorteil der Bootscap besteht darin, dass sie fast beliebig oft geladen und entladen werden können. Dies ist auch ein großer Vorteil gegenüber einer Batterie, die nach ca. 500 Ladezyklen verbraucht ist. Ebenso vorteilhaft ist der Einsatz von Doppelschichtkondensatoren aufgrund des geringen Energieverlustes beim Lade- und Entladevorgang.

Da Flurförderfahrzeuge zu Transporten eingesetzt werden, die ihren Ausgangspunkt immer wieder erreichen, werden statt Batterien erfindungsgemäß eben die genannten Boostcaps verwendet. Boostcaps können mit einem sehr hohem Strom geladen werden oder auch entladen werden. Im vorliegenden erfindungsgemäßen Fall werden die Boostcaps an einer Station, wo ein Be- und Entladebetrieb von Bauteilen für das Flurförderfahrzeug stattfindet, nebenher mit einem hohen Strom aufgeladen. Die Strommenge reicht aus, um ein Fahrzeug beispielsweise eine Transportrunde mit Strom zu versorgen. Nachfolgend sind einige beispielhafte Vorteile des erfindungsgemäßen Verfahrens und der erfindungsgemäßen Transporteinheit aufgeführt:
Das erfindungsgemäße Verfahren stellt ein Energieversorgungssystem zur Verfügung, das einem elektrisch angetriebenen Fahrzeug erlaubt, rund um die Uhr zu fahren. In Kombination mit einem Ladesystem, dass immer dann, wenn ein Fahrzeug an der Ladestation stehen bleibt, einen Energiestoß in Boostcaps abgibt, während das Fahrzeug für Be- und Entladetätigkeiten sowieso stehen bleibt, ist ein weiterer Vorteil zu sehen. Die Aufladung der Boostcaps erfolgt entweder über Ladekontakte, die im Boden eingelassen sind oder seitlich angebracht oder über kontaktlose, induktive Leistungsübertragung. In besonders vorteilhafter Art und Weise sind die Boostcaps außerdem dazu geeignet, über DC/DC-Wandler eine konstante Steuerspannung für Signale und Steuerelemente zu erzeugen. In einer besonders vorteilhaften Ausgestaltung werden die Boostcaps dazu eingesetzt über DC/DC-Wandler die erste Energiespeichereinrichtung, die als Hilfsbatterie ausgebildet sein kann, zu puffern, wobei die Hilfsbatterie die Signal- und die Steuerelemente des Fahrzeugs mit elektrischer Energie versorgen kann.

Der Antrieb kann im Notfall, wenn die Boostcaps leer sind oder ein vorgegebener Spannungswert unterschritten ist, von der gepufferten Batterie versorgt werden, bis die Boostcaps wieder aufgeladen sind, was in der Regel in relativ kurzer Zeit an der nächsten Ladestation erfolgt. Die Antriebe sind bevorzugt als bürstenlose Servo-Antriebe ausgebildet, die in einem großen Spannungsbereich arbeiten.

Vom Stand der Technik unterscheidet sich das erfindungsgemäße Verfahren dadurch, dass im Normalbetrieb die Antriebseinrichtung direkt aus dem Supercap gespeist wird. Die zusätzlich eingesetzte Batterie ist allen falls eine Pufferbatterie für den Notfall, falls der Supercap leer ist, wobei die Pufferbatterie auch zur Spannungsversorgung von Steuer- und Signalelementen eingesetzt werden kann. Eine derartige Anwendung ist in dieser Strukur nicht bekannt.

Weitere Ausführungsformen und Vorteile der Erfindung ergeben sich durch die in den Ansprüchen ferner aufgeführten Merkmale sowie durch das nachstehend angegebene Ausführungsbeispiel.

### KURZE BESCHREIBUNG DER ZEICHNUNG

Die Erfindung sowie vorteilhafte Ausführungsformen und Weiterbildungen derselben werden im Folgenden anhand des in der Zeichnung dargestellten Beispiels näher beschrieben und erläutert.

Es zeigen:
- Fig. 1: schematische Draufsicht auf eine dargestellte Montageanlage mit stationären Montagestationen und zwischen den Montagestationen fahrbare fahrerlose, mobile Montage- und/oder Materialtransporteinheiten, die mit einer ersten Energiespeichereinrichtung (Batterie) und einer zweiten Speichereinrichtung (Doppelschichtkondensator) betrieben werden und
- Fig. 2: schematisches Schaltbild für die Verknüpfung der ersten und zweiten Energiespeichereinrichtung mit einer externen Ladestation und einer Antriebseinrichtung einer Montage- und/oder Materialtransporteinheit.

### WEGE ZUM AUSFÜHREN DER ERFINDUNG

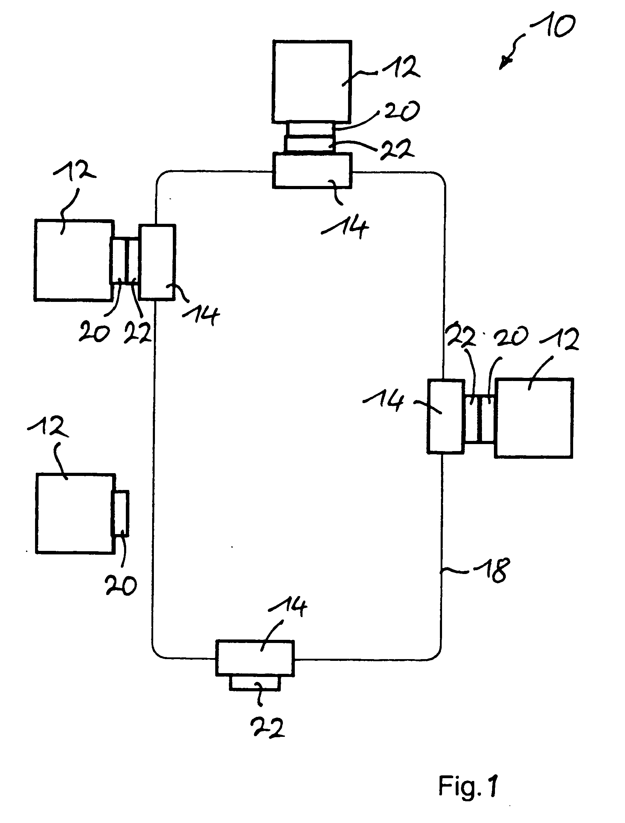

Bei der in der Fig.1 dargestellten Montageanlage 10 sind stationäre Montagestationen 12 vorhanden, die von fahrerlosen, mobilen Montage- und/oder Materialtransporteinheiten 14 angefahren werden.

Dabei ist zwischen den einzelnen Montagestationen 12 eine kodierte Fahrstrecke 18 vorhanden, die mittels an den fahrerlosen, mobilen Montage- und/oder Materialtransporteinheiten 14 vorhandenen Leseeinheiten gelesen und über eine Steuereinrichtung in eine Fahrbewegung umgesetzt wird. Eine Systemsteuerung stimmt die Fahrbewegungen der Montage- und/oder Materialtransporteinheiten 14 untereinander ab.

Neben einer kodierten Fahrstrecke 18 ist es auch möglich, die jeweilige Positionierung der Montage- und/oder Materialtransporteinheiten 14 über eine GPS (Global Positioning System)- oder optische oder induktive Steuerung vorzunehmen.

Als Energiespeichereinrichtung zum Antrieb der Antriebseinrichtung der fahrerlosen, mobilen Montage- und/oder Materialtransporteinheiten 14 wird eine Doppelschichtkondensatoreinrichtung, das heißt eine schnellaufladbare Energiespeichereinrichtung, eingesetzt.

Sowohl die fahrerlose, mobile Montage- und/oder Materialtransporteinheit 14 als auch die Montagestation 12 weisen elektrische Ladekontakte 20 beziehungsweise 22 auf, die bei entsprechender Positionierung der Montage- und/oder Materialtransporteinheit 14 vor der jeweiligen Montagestation 12 automatisch einen elektrisch leitenden Kontakt herstellen. Für die Verweildauer der Montage- und/ oder Materialtransporteinheit 14 an der jeweiligen Montagestation 12 wird eine Aufladung der Energiespeichereinrichtung der jeweiligen Montage- und/oder Materialtransporteinheit 14 über die Montagestation 12 vorgenommen. Dadurch ist eine lange Einsatzzeit der Fahrzeuge der fahrerlosen, mobilen Montage- und/oder Materialtransporteinheiten 14 möglich.

Die stationären Montagestationen 12 können beispielsweise Montagestationen mit vollautomatischem, halbautomatischem oder manuellem Betrieb sein.

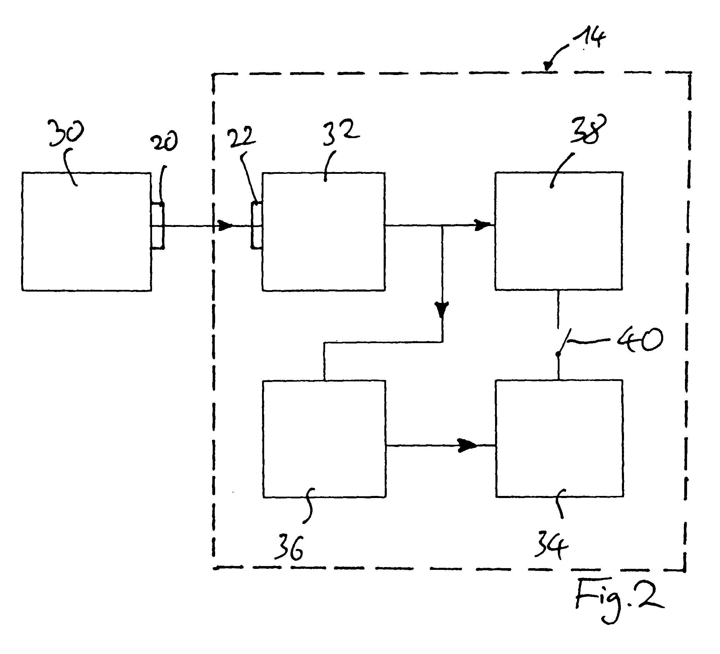

In Fig. 2 ist schematisch ein Schaltbild für eine Montage- und/oder Materialtransporteinheit 14 betreffend die Energieversorgung einer Antriebseinrichtung 38 dargestellt. Die Einheit 14 besitzt eine zweite, schnell aufladbare Energiespeichereinrichtung 32, insbesondere Doppelschichtkondensatoreinrichtung, und eine erste Energiespeichereinrichtung 34, die als Batterieeinrichtung ausgebildet ist.

Die zweite Energiespeichereinrichtung 32 ist über einen DC/DC-Wandler 36 mit der ersten Energiespeichereinrichtung 34 verbunden. Sowohl die erste als auch die zweite Energiespeichereinrichtung 34, 32 ist prinzipiell in der Lage, die Antriebseinrichtung 38 mit Antriebsenergie zu versorgen.

Zwischen der ersten Energiespeichereinrichtung 34 und der Antriebseinrichtung 38 ist eine Schalteinheit 40 vorhanden, die beispielsweise als Relais ausgebildet sein kann.

Die zweite Energiespeichereinrichtung 32 steht in dem in Fig. 2 dargestellten Zustand elektrisch leitend mit einer externen Ladeeinrichtung 30 in Verbindung, wobei die Kontaktierung über die Ladekontakte 20 beziehungsweise 22 erfolgt. Diese Ladestation 30 kann beispielsweise an einer Arbeitsstation vorhanden sein, die die Einheit 14 anfährt und bei Erreichen der Anfahrposition automatisch einen elektrischen Kontakt zwischen der Ladestation 30 und der zweiten Energiespeichereinrichtung 32 herstellt.

Die erfindungsgemäß Idee beruht nun darauf, die zweite Energiespeichereinrichtung 32 (Doppelschichtkondensatoreinrichtung) mit einer ersten Energiespeichereinrichtung 34 (Batterieeinrichtung) zu kombinieren, das heißt die erste Energiespeichereinrichtung 34 zum schnellen Aufladen an einer Ladestation 30 zu benutzen, um die Einheit bei einem relativ kurzen Stillstand (beim Parken, im Montageprozess etc.) mit maximaler Energie aufzuladen. Dies kann in relativ kurzer Zeit erfolgen. Die dabei gespeicherte Energie ist so bemessen, um die Antriebseinrichtung 38 der Einheit 14 von einer Ladestation bis zur nächsten mit Energie zu versorgen und gleichzeitig aber auch die erste Energiespeichereinrichtung 34 immer aufgeladen zu halten beziehungsweise neu auf zu laden. Diese Aufladung erfolgt über einen DC/DC-Wandler 36.

Falls eine Unterbrechung im laufenden Betrieb eintritt (zum Beispiel Werksferien, Stau, etc.) und sich die zweite Energiespeichereinrichtung 32 entleert, wird auf die erste Energiespeichereinrichtung 34 umgeschaltet und die Einheit ist nunmehr in der Lage ohne die zweite Energiespeichereinrichtung 32 bis zur nächsten Ladestation zu fahren, an der die zweite Energiespeichereinrichtung 32 von neuem aufgeladen werden kann.

Den zeitlichen Einsatzzustand der ersten beziehungsweise der zweiten Energiespeichereinrichtung 34, 32 übernimmt eine in Fig. 2 nicht näher dargestellte Steuereinrichtung, die bei Unterschreiten eines vorgegebenen Spannungswertes der zweiten Energiespeichereinrichtung 32 eine Umschalteinheit 40, die insbesondere als Relais ausgebildet sein kann, beaufschlagt, wodurch die erste Energiespeichereinrichtung 34 die Antriebseinrichtung 38 mit Antriebsenergie versorgt.

Durch die erfindungsgemäße Idee der Kombination einer Doppelschichtkondensatoreinrichtung mit einer Batterieeinrichtung ist ein dauerhaft zuverlässiger Betrieb und eine dauerhaft zuverlässige Funktion der erfindungsgemäßen Montage- und/ oder Materialtransporteinheit gegeben. Da zu weiten Teilen die Doppelschichtkondensatoreinrichtung die Energieversorgung der Antriebseinrichtung im Normalfall übernimmt, kann die Batterieeinrichtung hinsichtlich ihrer Ladekapazität relativ klein gehalten werden, was einem kompakten Aufbau der Montage- und/oder Materialtransporteinheit 14 entgegen kommt und zu einer deutlichen Gewichtsreduzierung führt.

## Patentansprüche

1. Verfahren zum Betreiben einer fahrerlosen, mobilen Montage- und/oder Materialtransporteinheit als fahrerloses Transportsystem (FTS) für eine Montage- und/oder Lageranlage mit
- einer Fahreinrichtung für die Fahrbewegung der Transporteinheit,
- einer Antriebseinrichtung (38) für die Fahreinrichtung,
- einer ersten Energiespeichereinrichtung (34), die als Batterieeinrichtung ausgebildet ist und
- einer Steuereinrichtung zur Steuerung der Fahrbewegung in Abstimmung mit einer Systemsteuereinrichtung,
- **dadurch gekennzeichnet, dass**
- in der Montage- und/oder Materialtransporteinheit zusätzlich eine zweite Energiespeichereinrichtung (32) verwendet wird, die als schnellaufladbare Einrichtung, insbesondere Doppelschichtkondensatoreinrichtung, ausgebildet ist,
- die zweite Energiespeichereinrichtung (32) bei Stillstand der Transporteinheit an einer Montage- oder Ladestation aufgeladen wird,
- die zweite Energiespeichereinrichtung (32) die Antriebsenergie für die Antriebseinrichtung (38) zur Verfügung stellt,
- die zweite Energiespeichereinrichtung (32) gleichzeitig die erste Energiespeichereinrichtung (34) aufgeladen hält oder neu auflädt,
- bei Entleerung der zweiten Energiespeichereinrichtung (32) oder bei Unterschreitung eines vorgegebenen Spannungswertes auf die erste Energiespeichereinrichtung (34) umgeschaltet wird, die dann die Antriebsenergie für die Antriebseinrichtung zur Verfügung stellt bis die zweite Energiespeichereinrichtung (32) an einer Montage-/Ladestation wieder aufgeladen wird und
- die erste Energiespeichereinrichtung (34) die Energie zum Betreiben einer Steuereinrichtung und/oder einer Sicherungseinrichtung mit Scanner, Sensoren oder dergleichen zur Verfügung stellt.

2. Verfahren nach Anspruch 1,
- **dadurch gekennzeichnet, dass**
- der Ladekontakt zur Aufladung der zweiten Energiespeichereinrichtung (32) bei Erreichen der jeweiligen Position an der Montagestation automatisch hergestellt wird.

3. Verfahren nach Anspruch 1 oder 2,
- **dadurch gekennzeichnet, dass**
- zwischen der ersten und der zweiten Energiespeichereinrichtung (32, 34) ein DC/DC-Wandler eingesetzt wird.

4. Verfahren nach einem oder mehreren der vorstehenden Ansprüche,
- **dadurch gekennzeichnet, dass**
- die zweite Energiespeichereinrichtung (32) mit einer Spannung von ca. 32 V (Volt) oder 48 V (Volt) und die erste Energiespeichereinrichtung (34) mit einer Spannung von ca. 27 V (Volt) betrieben wird.

5. Verfahren nach einem oder mehreren der vorstehenden Ansprüche,
- **dadurch gekennzeichnet, dass**
- bei Unterschreiten einer Spannung von 20 V (Volt) an der zweiten Energiespeichereinrichtung (32) umgestellt wird und die erste Energiespeichereinrichtung (34) die Energieversorgung der Antriebseinrichtung (38) übernimmt.

6. Verfahren nach einem oder mehreren der vorstehenden Ansprüche,
- **dadurch gekennzeichnet, dass**
- die erste Energiespeichereinrichtung (34) als kleine Pufferbatterie eingesetzt wird.

7. Fahrerlose, mobile Montage- und/oder Materialtransporteinheit als fahrerloses Transportsystem (FTS) für eine Montageanlage zum Einsatz in einem Verfahren nach einem oder mehreren der Ansprüche 1 bis 6, mit
- einer Fahreinrichtung für die Fahrbewegung,
- einer Antriebseinrichtung für die Fahreinrichtung,
- einer ersten Energiespeichereinrichtung (34), die als Batterieeinrichtung ausgebildet ist und
- einer Steuereinrichtung zur Steuerung der Fahrbewegung in Abstimmung mit einer Systemsteuereinrichtung,
- **dadurch gekennzeichnet, dass**
- eine zweite Energiespeichereinrichtung (32) für die Bereitstellung der Energie zum direkten Betrieb der Antriebseinrichtung vorhanden ist, die als schnellaufladbare Einrichtung, insbesondere Doppelschichtkondensatoreinrichtung, ausgebildet ist,
- eine Steuereinrichtung vorhanden ist, die bei geladener zweiter Energiespeichereinrichtung (32) die zur Verfügungsstellung der Antriebsenergie für die Antriebseinrichtung aus der zweiten Energiespeichereinrichtung (32) steuert und gleichzeitig die erste Energiespeichereinrichtung (34) über die zweite Energiespeichereinrichtung (32) im geladenen Zustand hält oder neu auflädt und bei Entleerung der zweiten Energiespeichereinrichtung (32) oder bei Unterschreitung eines vorgegebenen Spannungswertes der zweiten Energiespeichereinrichtung (32) die erste Energiespeichereinrichtung (34) aktiviert zur Energieversorgung der Antriebseinheit bis die zweite Energiespeichereinrichtung (32) wieder aufgeladen ist,
- wobei die erste Energiespeichereinrichtung (34) die Energie zum Betreiben einer Steuereinrichtung und/oder einer Sicherungseinrichtung mit Scanner, Sensoren oder dergleichen zur Verfügung stellt.

8. Montage- und/oder Materialtransporteinheit nach Anspruch 7,
- **dadurch gekennzeichnet, dass**
- die Antriebseinrichtung zumindest einen bürstenlosen Servo-Antriebsmotor aufweist.

## Claims

1. A method for operating a driverless, mobile assembly and/or material transport unit as a driverless transport system (DTS) for an assembly and/or warehousing facility with
- a travel device for the traveling movement of the transport unit,
- a drive device (38) for the travel device,
- a first energy storage device (34) which is in the form of a battery device, and
- a control device for controlling the traveling movement in coordination with a system control device,
- **characterized in that**
- in addition, a second energy storage device (32) is used in the assembly and/or material transport unit, said second energy storage device being in the form of a device which can be charged quickly, in particular a double-layer capacitor device,
- the second energy storage device (32) is charged at an assembly or charging station when the transport unit is at a standstill,
- the second energy storage device (32) provides the drive energy for the drive device (38),
- the second energy storage device (32) at the same time keeps the first energy storage device (34) charged or recharges said first energy storage device,
- when the second energy storage device (32) is emptied or when a predetermined voltage value is undershot, the system switches over to the first energy storage device (34), which then provides the drive energy for the drive device until the second energy storage device (32) is recharged at an assembly/charging station, and
- the first energy storage device (34) provides the energy for operating a control device and/or a safety device with a scanner, sensors or the like.

2. The method as claimed in claim 1,
- **characterized in that**
- the charging contact for charging the second energy storage device (32) is produced automatically when the respective position at the assembly station is reached.

3. The method as claimed in claim 1 or 2,
- **characterized in that**
- a DC/DC converter is inserted between the first and the second energy storage devices (32, 34).

4. The method as claimed in one or more of the preceding claims,
- **characterized in that**
- the second storage device (32) is operated on a voltage of approximately 32 V (volts) or 48 V (volts) and the first energy storage device (34) is operated on a voltage of approximately 27 V (volts).

5. The method as claimed in one or more of the preceding claims,
- **characterized in that**
- when a voltage of 20 V (volts) at the second energy storage device (32) is undershot, the system is switched over and the first energy storage device (34) takes on the function of supplying energy to the drive device (38).

6. The method as claimed in one or more of the preceding claims,
- **characterized in that**
- the first energy storage device (34) is used as a small backup battery.

7. A driverless, mobile assembly and/or material transport unit as a driverless transport system (DTS) for an assembly facility for use in a method as claimed in one or more of claims 1 to 6, with
- a travel device for the traveling movement,
- a drive device for the travel device,
- a first energy storage device (34) which is in the form of a battery device, and
- a control device for controlling the traveling movement in coordination with a system control device,
- **characterized in that**
- a second energy storage device (32) is provided for providing the energy for the direct operation of the drive device, said second energy storage device being in the form of a device which can be charged quickly, in particular a double-layer capacitor device,
- a control device is provided which, when the second energy storage device (32) is charged, controls the provision of the drive energy for the drive device from the second energy storage device (32) and at the same time keeps the first energy storage device (34) in the charged state, or recharges said first energy storage device, via the second energy storage device (32), and, when the second energy storage device (32) is emptied or when a predetermined voltage value for the second energy storage device (32) is undershot, activates the first energy storage device (34) for supplying energy to the drive unit until the second energy storage device (32) has been recharged,
- wherein the first energy storage device (34) provides the energy for operating a control device and/or a safety device with a scanner, sensors or the like.

8. The assembly and/or material transport unit as claimed in claim 7,
- **characterized in that**
- the drive device has at least one brushless servodrive motor.

## Revendications

1. Procédé pour exploiter une unité mobile de montage et/ou de transport de matériaux sans conducteur comme système de véhicules à guidage automatique (SVGA) pour une installation de montage et/ou de stockage, avec
- un dispositif de translation pour le mouvement de translation de l'unité de transport,
- un dispositif d'entraînement (38) pour le dispositif de translation,
- un premier dispositif accumulateur d'énergie (34), qui est réalisé sous forme de dispositif à batterie, et
- un dispositif de commande pour commander le mouvement de translation en coordination avec un dispositif de commande de système,
**caractérisé en ce que**
- on utilise en outre dans l'unité de montage et/ou de transport de matériaux un deuxième dispositif accumulateur d'énergie (32) qui est réalisé sous forme de dispositif à charge rapide, en particulier de dispositif à condensateur à double couche,
- le deuxième dispositif accumulateur d'énergie (32) est chargé lors de l'arrêt de l'unité de transport à un poste de montage ou de charge,
- le deuxième dispositif accumulateur d'énergie (32) fournit l'énergie d'entraînement pour le dispositif d'entraînement (38),
- en même temps, le deuxième dispositif accumulateur d'énergie (32) maintient la charge du premier dispositif accumulateur d'énergie (34) ou le recharge,
- lorsque le deuxième dispositif accumulateur d'énergie (32) est déchargé ou lorsqu'on tombe en dessous d'une valeur de tension prédéterminée, le système passe sur le premier dispositif accumulateur d'énergie (34), qui fournit alors l'énergie d'entraînement pour le dispositif d'entraînement jusqu'à ce que le deuxième dispositif accumulateur d'énergie (32) soit rechargé à un poste de montage/de charge, et
- le premier dispositif accumulateur d'énergie (34) fournit l'énergie pour exploiter un dispositif de commande et/ou un dispositif de sauvegarde avec scanner, capteurs ou analogues.

2. Procédé selon la revendication 1, **caractérisé en ce que** le contact de charge pour charger le deuxième dispositif accumulateur d'énergie (32) est automatiquement réalisé à l'atteinte de la position respective au poste de montage.

3. Procédé selon la revendication 1 ou 2, **caractérisé en ce qu'**un convertisseur CC/CC est monté entre le premier et le deuxième dispositifs accumulateurs d'énergie (32, 34).

4. Procédé selon une ou plusieurs des revendications précédentes, **caractérisé en ce que** le deuxième dispositif accumulateur d'énergie (32) est exploité à une tension d'environ 32 V (volts) ou 48 V (volts), et le premier dispositif accumulateur d'énergie (34) à une tension d'environ 27 V (volts).

5. Procédé selon une ou plusieurs des revendications précédentes, **caractérisé en ce que** le système est commuté lorsque la tension du deuxième dispositif accumulateur d'énergie (32) tombe en dessous de 20 V (volts), et le premier dispositif accumulateur d'énergie (34) prend en charge l'alimentation en énergie du dispositif d'entraînement (38).

6. Procédé selon une ou plusieurs des revendications précédentes, **caractérisé en ce que** le premier dispositif accumulateur d'énergie (34) est utilisé comme petite batterie de sauvegarde.

7. Unité mobile de montage et/ou de transport de matériaux sans conducteur comme système de véhicules à guidage automatique (SVGA) pour une installation de montage, à utiliser dans un procédé selon une ou plusieurs des revendications 1 à 6, avec
- un dispositif de translation pour le mouvement de translation,
- un dispositif d'entraînement pour le dispositif de translation,
- un premier dispositif accumulateur d'énergie (34), qui est réalisé sous forme de dispositif à batterie, et
- un dispositif de commande pour commander le mouvement de translation en coordination avec un dispositif de commande de système,
**caractérisée en ce que**
- un deuxième dispositif accumulateur d'énergie (32) est présent pour fournir l'énergie pour l'exploitation directe du dispositif d'entraînement et il est réalisé sous forme de dispositif à charge rapide, en particulier de dispositif à condensateur à double couche,
- un dispositif de commande est présent qui, lorsque le deuxième dispositif accumulateur d'énergie (32) est chargé, commande la fourniture de l'énergie d'entraînement pour le dispositif d'entraînement à partir du deuxième dispositif accumulateur d'énergie (32) et qui en même temps, au moyen du deuxième dispositif accumulateur d'énergie (32), maintient le premier dispositif accumulateur d'énergie (34) dans l'état chargé ou le recharge, et qui, lorsque le deuxième dispositif accumulateur d'énergie (32) est déchargé ou lorsqu'on tombe en dessous d'une valeur de tension prédéterminée du deuxième dispositif accumulateur d'énergie (32), active le premier dispositif accumulateur d'énergie (34) pour alimenter en énergie le dispositif d'entraînement jusqu'à ce que le deuxième dispositif accumulateur d'énergie (32) soit rechargé,
- sachant que le premier dispositif accumulateur d'énergie (34) fournit l'énergie pour exploiter un dispositif de commande et/ou un dispositif de sauvegarde avec scanner, capteurs ou analogues.

8. Unité de montage et/ou de transport de matériaux selon la revendication 7, **caractérisée en ce que** le dispositif d'entraînement présente au moins un moteur de servo-entraînement sans balais.
